(19) Europäisches Patentamt
European Patent Office
Office européen des brevets

(11) **EP 3 893 170 B1**

(12) **EUROPEAN PATENT SPECIFICATION**

(45) Date of publication and mention
of the grant of the patent:
**28.02.2024 Bulletin 2024/09**

(51) International Patent Classification (IPC):
**G06N 20/00** *(2019.01)*    **G06F 21/60** *(2013.01)*
**H04L 9/08** *(2006.01)*    **G06F 21/62** *(2013.01)*
**H04L 9/00** *(2022.01)*

(21) Application number: **19917861.7**

(22) Date of filing: **18.11.2019**

(52) Cooperative Patent Classification (CPC):
**H04L 9/008; G06F 21/6254; G06N 20/00;**
**H04L 9/0891;** G06F 21/606

(86) International application number:
**PCT/CN2019/119227**

(87) International publication number:
**WO 2020/177392 (10.09.2020 Gazette 2020/37)**

(54) **FEDERATED LEARNING-BASED MODEL PARAMETER TRAINING METHOD, APPARATUS AND DEVICE, AND MEDIUM**

VERFAHREN, EINRICHTUNG UND VORRICHTUNG ZUM TRAINIEREN VON MODELLPARAMETERN AUF BASIS VON FÖDERIERTEM LERNEN

PROCÉDÉ, APPAREIL ET DISPOSITIF D'APPRENTISSAGE DE PARAMÈTRE DE MODÈLE BASÉ SUR UN APPRENTISSAGE FÉDÉRÉ, ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2019 CN 201910158538**

(43) Date of publication of application:
**13.10.2021 Bulletin 2021/41**

(73) Proprietor: **Webank Co.,Ltd**
**Shenzhen, Guangdong 518000 (CN)**

(72) Inventors:
• **LIU, Yang**
**Shenzhen, Guangdong 518000 (CN)**
• **CHEN, Tianjian**
**Shenzhen, Guangdong 518000 (CN)**
• **YANG, Qiang**
**Shenzhen, Guangdong 518000 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(56) References cited:
**CN-A- 109 165 515**    **CN-A- 109 165 725**
**CN-A- 109 255 444**    **CN-A- 109 325 584**
**CN-A- 109 886 417**    **US-A1- 2017 310 643**

**Description**

**CROSS-REFERENCE TO RELATED APPLICATIONS**

This application claims priority to Chinese Application No. 201910158538.8, filed on March 1, 2019, filed with Chinese National Intellectual Property Administration, and entitled "MODEL PARAMETER TRAINING METHOD, APPARATUS, AND DEVICE BASED ON FEDERATION LEARNING, AND MEDIUM".

**TECHNICAL FIELD**

The present disclosure relates to the technical field of data processing, and in particular to a model parameter training method, apparatus, and device based on federation learning, and a medium.

**BACKGROUND**

"Machine learning" is one of the core research areas of artificial intelligence, and how to continue machine learning on the premise of protecting data privacy and meeting legal compliance requirements is a trend in the field of machine learning. In this context, people researched and put forward the concept of "federation learning".

Federation learning uses technical algorithms to encrypt the model. Both parties of the federation can also perform model training to obtain model parameters without providing their own data. Federation learning protects user data privacy through parameter exchange under the encryption mechanism. The data and the model itself will not be transmitted, and the data of the other party cannot be guessed. Therefore, there is no possibility of data leakage, nor does it violate more stringent data protection laws such as General Data Protection Regulation (GDPR), which can maintain data integrity at a high level while ensuring data privacy. However, the current federation learning technology must rely on a trusted third party to model the data of the federation parties through the third party, which makes the application of federation learning limited in some scenarios. The documents US2017/310643A1 and CN109325584A are relevant prior art for the invention as defined by the independent claims.

**SUMMARY**

The main objective of the present disclosure is to provide a model parameter training method, apparatus, and device based on federation learning, and a storage medium, which aims to realize that model training can be carried out without a trusted third party and only using data from both federation parties to avoid application restrictions.

In order to achieve the above objective, the present disclosure provides a model parameter training method based on federation learning, including the following operations:

when a first terminal receives encrypted second data sent by a second terminal, obtaining a loss encryption value and a first gradient encryption value according to the encrypted second data;
randomly generating a random vector with same dimension as the first gradient encryption value, blurring the first gradient encryption value based on the random vector, and sending the blurred first gradient encryption value and the loss encryption value to the second terminal;
when receiving a decrypted first gradient value and a decrypted loss value returned by the second terminal based on the blurred first gradient encryption value and the loss encryption value, detecting whether a model to be trained is in a convergent state according to the decrypted loss value; and
if the model to be trained is in the convergent state, obtaining a second gradient value according to the random vector and the decrypted first gradient value and determining a sample parameter corresponding to the second gradient value as a model parameter of the model to be trained.

Besides, in order to achieve the above objective, the present disclosure further provides a model parameter training apparatus based on federation learning, including:

a data acquisition module configured to, when a first terminal receives encrypted second data sent by a second terminal, obtain a loss encryption value and a first gradient encryption value according to the encrypted second data;

a first sending module configured to randomly generate a random vector with same dimension as the first gradient encryption value, blur the first gradient encryption value based on the random vector, and send the blurred first gradient encryption value and the loss encryption value to the second terminal;

a model detection module configured to, when receiving a decrypted first gradient value and a decrypted loss value returned by the second terminal based on the blurred first gradient encryption value and the loss encryption value, detect whether a model to be trained is in a convergent state according to the decrypted loss value; and

a parameter determination module configured to, if the model to be trained is in the convergent state, obtain a second gradient value according to the random vector and the decrypted first gradient value and determine a sample parameter corresponding to the second gradient value as a model parameter of the model to be trained.

In addition, in order to achieve the above objective, the present disclosure further provides a model parameter training device based on federation learning, including: a memory, a processor, and a model parameter training program based on federation learning stored on the memory and executable on the processor, the model parameter training program based on federation learning, when executed by the processor, implements operations of the model parameter training method based on federation learning as described above.

In addition, in order to achieve the above objective, the present disclosure further provides a storage medium. A model parameter training program based on federation learning is stored on the storage medium, and the model parameter training program based on federation learning, when executed by a processor, implements operations of the model parameter training method based on federation learning as described above.

The present disclosure provides a model parameter training method, apparatus, and device based on federation learning, and a medium. The method includes: when a first terminal receives encrypted second data sent by a second terminal, obtaining a loss encryption value and a first gradient encryption value according to the encrypted second data; randomly generating a random vector with same dimension as the first gradient encryption value, blurring the first gradient encryption value based on the random vector, and sending the blurred first gradient encryption value and the loss encryption value to the second terminal; when receiving a decrypted first gradient value and a decrypted loss value returned by the second terminal based on the blurred first gradient encryption value and the loss encryption value, detecting whether a model to be trained is in a convergent state according to the decrypted loss value; and if the model to be trained is in the convergent state, obtaining a second gradient value according to the random vector and the decrypted first gradient value, that is, removing the random vector in the decrypted first gradient value to restore the true gradient value to obtain the second gradient value and determining a sample parameter corresponding to the second gradient value as a model parameter of the model to be trained. The present disclosure only uses the data transmission and calculation between the first terminal and the second terminal to finally obtain the loss value, to determine the model parameter in the model to be trained. Thus, the model can be trained without relying on a third party and only using data from two parties to avoid application restrictions. Meanwhile, the second data received by the first terminal in the present disclosure is the encryption data of the intermediate result of the model. The data during the communication between the first terminal and the second terminal is encrypted and obfuscated. Therefore, the present disclosure will not disclose the original feature data, and can achieve the same level of security assurance, ensuring the privacy and security of terminal sample data.

**BRIEF DESCRIPTION OF THE DRAWINGS**

FIG. 1 is a schematic structural diagram of a device of hardware operating environment according to an embodiment of the present disclosure.

FIG. 2 is a schematic flowchart of a model parameter training method based on federation learning according to a first embodiment of the present disclosure.

FIG. 3 is a schematic detailed flowchart of operation S30 in the first embodiment of the present disclosure.

FIG. 4 is a schematic detailed flowchart of operation S10 in the first embodiment of the present disclosure.

FIG. 5 is a schematic flowchart of the model parameter training method based on federation learning according to a second embodiment of the present disclosure.

FIG. 6 is a schematic flowchart of the model parameter training method based on federated learning according to a third embodiment of the present disclosure.

FIG. 7 is a schematic flowchart of the model parameter training method based on federated learning according to a fourth embodiment of the present disclosure.

FIG. 8 is a schematic diagram of functional modules of a model parameter training apparatus based on federation learning according to a first embodiment of the present disclosure.

The realization of the objective, functional characteristics, and advantages of the present disclosure are further described with reference to the accompanying drawings.

## DETAILED DESCRIPTION OF THE EMBODIMENTS

It should be understood that the specific embodiments described here are only used to explain the present application, and are not used to limit the present application.

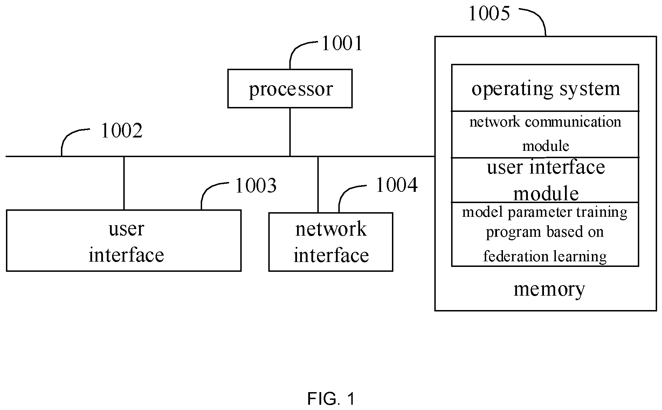

As shown in FIG. 1, FIG. 1 is a schematic structural diagram of a device of hardware operating environment according to an embodiment of the present disclosure.

In an embodiment of the present disclosure, a model parameter training device based on federation learning can be a terminal device such as a smart phone, a personal computer, a tablet, a portable computer, and a server.

As shown in FIG. 1, the model parameter training device based on federation learning may include a processor 1001, such as a CPU, a communication bus 1002, a user interface 1003, a network interface 1004, and a memory 1005. The communication bus 1002 is configured to implement communication between those components. The user interface 1003 may include a display, an input unit such as a keyboard. The user interface 1003 may also include a standard wired interface and a wireless interface. The network interface 1004 may further include a standard wired interface and a wireless interface (such as a WI-FI interface). The memory 1005 may be a high-speed random access memory (RAM) or a non-volatile memory, such as a magnetic disk memory. The memory 1005 may also be a storage device independent of the foregoing processor 1001.

Those skilled in the art should understand that the structure of the model parameter training device based on federation learning shown in FIG. 1 does not constitute a limitation on the model parameter training device based on federation learning, which may include more or fewer components, a combination of some components, or differently arranged components than shown in the figure.

As shown in FIG. 1, the memory 1005 as a computer storage medium may include an operating system, a network communication module, a user interface module, and a model parameter training program based on federation learning.

In the terminal shown in FIG. 1, the network interface 1004 is mainly configured to connect to a background server and perform data communication with the background server. The user interface 1003 is mainly configured to connect to a client and perform data communication with the client. The processor 1001 may be configured to call the model parameter training program based on federation learning stored in the memory 1005, and perform the following operations of the model parameter training method based on federation learning.

Based on the above hardware structure, various embodiments of the model parameter training method based on federation learning in the present disclosure are proposed.

The present disclosure provides a model parameter training method based on federation learning.

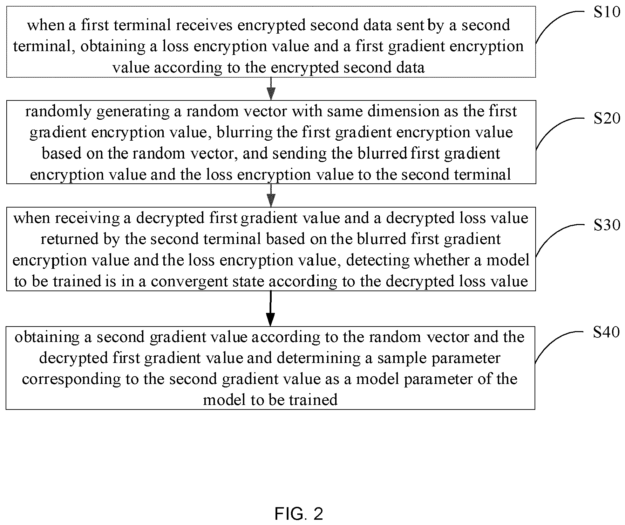

As shown in FIG. 2, FIG. 2 is a schematic flowchart of a model parameter training method based on federation learning according to a first embodiment of the present disclosure.

In this embodiment, the model parameter training method based on federation learning includes:

Operation S10, when a first terminal receives encrypted second data sent by a second terminal, obtaining a loss encryption value and a first gradient encryption value according to the encrypted second data.

In this embodiment, when receiving the encrypted second data sent by the second terminal, the first terminal obtains the loss encryption value and the first gradient encryption value according to the encrypted second data. The first terminal and the second terminal can be terminal devices such as smart phones, personal computers, tablet computers, portable computers, and servers. The second data is calculated by the second terminal based on its sample data and corresponding sample parameters, and is the intermediate result of the model. Then the second terminal encrypts the second data, and can generate a public key and a private key through the key pair generation software. Then, the generated public key is used to encrypt the second data through a homomorphic encryption algorithm to obtain the encrypted second data, so as to ensure the privacy and security of the transmitted data. Besides, the method for obtaining the loss encryption value and the first gradient encryption value is: when the first terminal receives the second data sent by the second terminal, obtaining first data corresponding to the second data and a sample label corresponding to the first data; calculating a loss value based on the first data, the encrypted second data, the sample label, and a preset loss function, and using a public key of the second terminal (the second terminal will send its public key to the first terminal), encrypting a calculation factor for calculating each loss value through a homomorphic encryption algorithm to obtain the encrypted loss value, which is the loss encryption value; and obtaining a gradient function according to the preset loss function, calculating the first gradient value according to the gradient function, and using the public key of the second terminal to encrypt the first gradient value through the homomorphic encryption algorithm to obtain the encrypted first gradient value, which is the first gradient encryption value. For the specific acquisition process, refer to the following embodiments, which will not be repeated here.

Operation S20, randomly generating a random vector with same dimension as the first gradient encryption value, blurring the first gradient encryption value based on the random vector, and sending the blurred first gradient encryption value and the loss encryption value to the second terminal.

After obtaining the loss encryption value and the first gradient encryption value, the first terminal randomly generates a random vector with the same dimension as the first gradient encryption value, and blurs the first gradient encryption value based on the random vector, that is, if the first gradient encryption value is [[g]], the random vector is R, then the first gradient encryption value after blurring is [[g+R]], and then the first gradient encryption value after blurring and the loss encryption value are sent to the second terminal. Correspondingly, when the second terminal receives the first gradient encryption value and the loss encryption value, the first gradient encryption value and the loss encryption value are decrypted by the private key of the second terminal to obtain the decrypted first gradient value and the loss value.

Operation S30, when receiving a decrypted first gradient value and a decrypted loss value returned by the second terminal based on the blurred first gradient encryption value and the loss encryption value, detecting whether a model to be trained is in a convergent state according to the decrypted loss value.

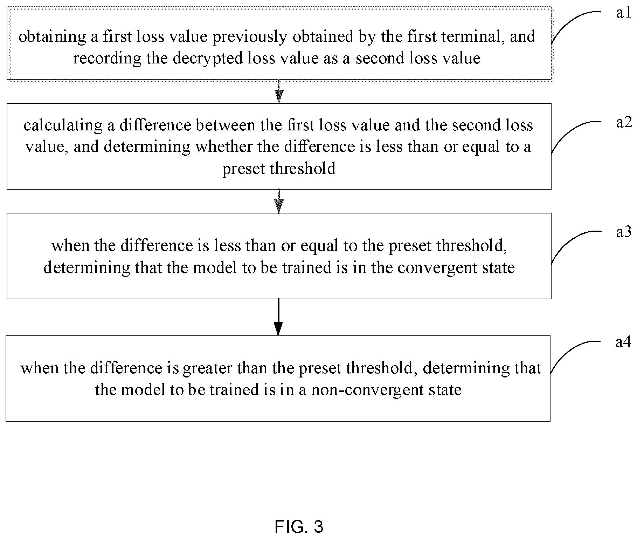

When receiving the decrypted first gradient value and the decrypted loss value returned by the second terminal based on the blurred first gradient encryption value and the loss encryption value, the first terminal detects whether the model to be trained is in the convergent state according to the decrypted loss value. Specially, as shown in FIG. 3, the operation of detecting whether a model to be trained is in a convergent state according to the decrypted loss value includes: Operation a1, obtaining a first loss value previously obtained by the first terminal, and recording the decrypted loss value as a second loss value.

After obtaining the decrypted loss value, the first terminal obtains the first loss value previously obtained by the first terminal, and records the decrypted loss value as the second loss value. It should be noted that when the model to be trained is in a non-convergent state, the first terminal will continue to obtain the loss encryption value according to the encrypted second data sent by the second terminal, and then send the loss encryption value to the second terminal for decryption, then, receives the decrypted loss value returned by the second terminal until the model to be trained is in a convergent state. The first loss value is also the loss value after decryption by the second terminal. It can be understood that the first loss value is the decrypted loss value sent by the second terminal last time, and the second loss value is the decrypted loss value currently sent by the second terminal.

Operation a2, calculating a difference between the first loss value and the second loss value, and determining whether the difference is less than or equal to a preset threshold.

After obtaining the first loss value and the second loss value, the first terminal calculates the difference between the first loss value and the second loss value, and determines whether the difference is less than or equal to the preset threshold. The specific value of the preset threshold can be set in advance according to specific needs, and there is no specific limitation on the value corresponding to the preset threshold in this embodiment.

Operation a3, when the difference is less than or equal to the preset threshold, determining that the model to be trained is in the convergent state.

Operation a4, when the difference is greater than the preset threshold, determining that the model to be trained is in a non-convergent state.

When the difference is less than or equal to the preset threshold, the first terminal determines that the model to be trained is in the convergent state; when the difference is greater than the preset threshold, the first terminal determines that the model to be trained is in the non-convergent state.

Operation S40, if the model to be trained is in the convergent state, obtaining a second gradient value according to the random vector and the decrypted first gradient value and determining a sample parameter corresponding to the second gradient value as a model parameter of the model to be trained.

If it is detected that the model to be trained is in the convergent state, the first terminal obtains the second gradient value according to the random vector and the decrypted first gradient value, that is, the random vector in the decrypted first gradient value is removed to restore the true gradient value to obtain the second gradient value, and then the sample parameter corresponding to the second gradient value is determined as the model parameter of the model to be trained.

The present disclosure provides a model parameter training method based on federation learning. The method includes: when a first terminal receives encrypted second data sent by a second terminal, obtaining a loss encryption value and a first gradient encryption value according to the encrypted second data; randomly generating a random vector with same dimension as the first gradient encryption value, blurring the first gradient encryption value based on the random vector, and sending the blurred first gradient encryption value and the loss encryption value to the second terminal; when receiving a decrypted first gradient value and a decrypted loss value returned by the second terminal based on the blurred first gradient encryption value and the loss encryption value, detecting whether a model to be trained is in a convergent state according to the decrypted loss value; and if the model to be trained is in the convergent state, obtaining a second gradient value according to the random vector and the decrypted first gradient value and determining a sample parameter corresponding to the second gradient value as a model parameter of the model to be trained. The present disclosure only uses the data transmission and calculation between the first terminal and the second terminal to finally obtain the loss value, to determine the model parameter in the model to be trained. Thus, the model can be trained without relying on a third party and only using data from two parties to avoid application restrictions. Meanwhile, the second data received by the first terminal in the present disclosure is the encryption data of the intermediate result of the model. The data during the communication between the first terminal and the second terminal is encrypted and obfuscated. Therefore, the present disclosure will not disclose the original feature data, and can achieve the same level of security assurance, ensuring the privacy and security of terminal sample data.

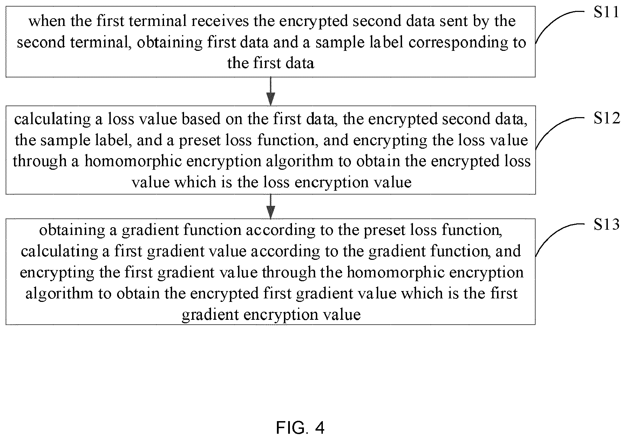

Further, as shown in FIG. 4, FIG. 4 is a schematic detailed flowchart of operation S10 in the first embodiment of the present disclosure.

Specially, operation S10 includes:

Operation S11, when the first terminal receives the encrypted second data sent by the second terminal, obtaining first data and a sample label corresponding to the first data.

In this embodiment, after receiving the second data sent by the second terminal, the first terminal obtains the corresponding first data and the sample label corresponding to the first data. The first data and the second data are the intermediate results of the model. The first data is calculated by the first terminal based on its sample data and corresponding sample parameter, and the second data is calculated by the second terminal based on its sample data and corresponding sample parameter. Specifically, the second data may be a sum of the product of the sample parameter in the second terminal and a variable value corresponding to the feature variable in the intersection of the sample data of the second terminal, and a square of the sum of the product. The calculation formula corresponding to the original second data can be:   $u_A = w_A^T x_A = w_1 x_{i1} + w_2 x_{i2} \cdots w_n x_{in}$   . The square of the sum of products is expressed as:   $u_A^2$   . $w_1$ , $w_2 \cdots w_n$ represents the sample parameter corresponding to the second terminal. The number of variable values corresponding to the feature variable in the second terminal is equal to the number of sample parameters corresponding to the second terminal, that is, a variable value corresponds to a sample parameter, x represents the feature value of the feature variable, 1, 2...n represents the corresponding variable value and the number of sample parameters. For example, when there are three variable values for each feature variable in the intersection of the sample data of the second terminal, then   $u_A = w_A^T x_A = w_1 x_{i1} + w_2 x_{i2} + w_3 x_{i3}$   . It should be noted that the second data sent by the second terminal to the first terminal is encrypted second data. After calculating the second data, the second terminal uses the public key of the second terminal to encrypt the second data through the homomorphic encryption algorithm to obtain the encrypted second data, and sends the encrypted first data to the second terminal. The second data sent to the first terminal, that is, the encrypted second data can be expressed as $[[u_A]]$ and $[\,[u_A^2]\,]$.

The process of calculating the first data by the first terminal is similar to the process of calculating the second data by the second terminal. For example, the formula for calculating the sum of the product of the variable value corresponding to the feature variable in the intersection of the sample parameter in the first terminal and the sample data of the first terminal is:   $u_B = w_B^T x_B = w_1 x_{i1} + w_2 x_{i2} \cdots w_n x_{in}$   . $w_1$ , $w_2 \cdots w_n$ represents the sample parameter corresponding to the feature value of each feature variable of the sample data in the first terminal.

Operation S12, calculating a loss value based on the first data, the encrypted second data, the sample label, and a preset loss function, and encrypting the loss value through a homomorphic encryption algorithm to obtain the encrypted loss value, which is the loss encryption value.

After receiving the encrypted second data and obtaining the corresponding first data and the corresponding sample label, the first terminal calculates the loss value based on the first data, the encrypted second data, the sample label, and the preset loss function, and encrypts the loss value through the homomorphic encryption algorithm to obtain the encrypted loss value, which is the loss encryption value.

$$loss = \log 2 - \frac{1}{2} y w^T x + \frac{1}{8} \left( w^T x \right)^2$$

Specially,   the   loss   value   is   represented   as   *loss.*

$$u = w^T x = w_A^T x_A + w_B^T x_B \, , \quad \left( w^T x \right)^2 = u^2 = \left( u_A + u_B \right)^2 = u_A^2 + u_B^2 + 2u_A u_B$$

. y represents the label value of the sample label corresponding to the first data, and the value of the label value corresponding to the sample label can be set according to specific needs. In this embodiment, "0" and "1" may be used to represent the label values corresponding to different sample labels. When the first terminal calculates the loss value, the first terminal uses the public key of the second terminal (the second terminal will send its public key to the first terminal), and encrypts the calculation factor for calculating each loss value through the homomorphic encryption algorithm to obtain the encrypted loss value. The encrypted loss value (that is, the loss encryption value) is denoted as $[[loss]]$. log 2, $yw^Tx$ and $(w^Tx)^2$

$$[[loss]] = [[\log 2]] + \left( -\frac{1}{2} \right) * [[yw^T x]] + \frac{1}{8} [[ (w^T x)^2 ]]$$

.

are the calculation factors for calculating the loss value.

$$[[u]] = [[u_A + u_B]] = [[u_A]] + [[u_B]]$$

.

$$[[ (w^T x)^2 ]] = [[(u)^2]] = [[u_A^2]] + [[u_B^2]] + [[2u_A u_B]] = [[u_A^2]] + [[u_B^2]] + 2u_B [[u_A]]$$

.

Operation S13, obtaining a gradient function according to the preset loss function, calculating a first gradient value according to the gradient function, and encrypting the first gradient value through the homomorphic encryption algorithm to obtain the encrypted first gradient value, which is the first gradient encryption value.

Then, the gradient function is obtained according to the preset loss function, the first gradient value is calculated according to the gradient function, and the first gradient value is encrypted through the homomorphic encryption algorithm to obtain the encrypted first gradient value, which is the first gradient encryption value.

Specially, the formula for the first terminal to calculate its corresponding gradient value that is, the first gradient

$$g = \sum \left( \frac{1}{2} yw^T x - 1 \right) \frac{1}{2} yx$$

value) is: . After the first gradient value is calculated, the first terminal uses the public key of its second terminal to encrypt the first gradient value through the homomorphic encryption algorithm to obtain the encrypted loss value (i.e., the first gradient encryption value). Correspondingly, the formula of the first gradient encryption value is: $[[g]] = \sum [[d]] x$.

$$[[d]] = \left[ \left[ \left( \frac{1}{2} yw^T x - 1 \right) \frac{1}{2} y \right] \right] = \left( \frac{1}{2} [[yw^T x]] + [[-1]] \right) \frac{1}{2} y$$

.

It should be noted that in this embodiment, parameter servers are used, both the first terminal and the second terminal have independent parameter servers for the aggregation and update synchronization of their respective sample data, while avoiding the leakage of their respective sample data. In addition, the sample parameters corresponding to the first terminal and the second terminal, that is, the model parameters are stored separately, which improves the security of the data of the first terminal and the second terminal.

In this embodiment, the loss value is calculated according to the received encrypted second data from the second terminal, the first data of the first terminal, and the sample label corresponding to the first data, and the homomorphic encryption algorithm is used to encrypt the loss value to obtain the loss encryption value, such that during the process of calculating the loss value, the first terminal cannot obtain the specific sample data of the second terminal, realizing that during the process of calculating model parameters by the first terminal in conjunction with the second terminal sample data, the loss value required to calculate the model parameters can be calculated on the basis of not exposing the sample data of the second terminal, which improves the privacy of the sample data of the second terminal during the process of calculating the model parameters.

Based on the foregoing embodiment, a second embodiment of the model parameter training method based on federation learning in the present disclosure is proposed.

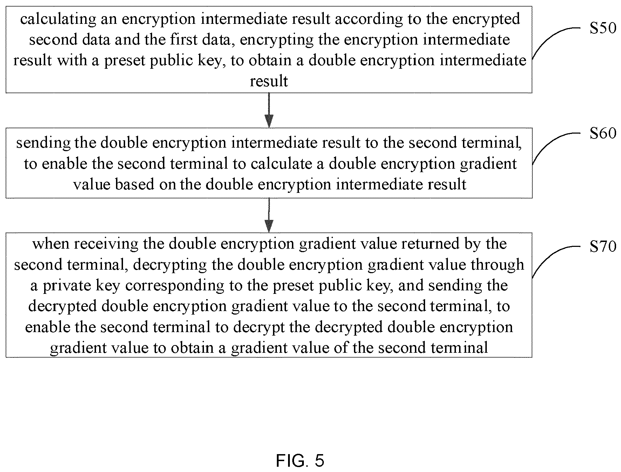

As shown in FIG. 5, in this embodiment, the model parameter training method based on federation learning further includes:

Operation S50, calculating an encryption intermediate result according to the encrypted second data and the first data, encrypting the encryption intermediate result with a preset public key, to obtain a double encryption intermediate result.

As one of the ways to obtain the gradient value of the second terminal, in this embodiment, the first terminal may calculate the encryption intermediate result according to the encrypted second data and the obtained first data, and then encrypt the encrypted intermediate result with the preset public key to obtain the double encryption intermediate result. The preset public key is a public key generated by the first terminal according to the key pair generation software, and is the public key of the first terminal.

Operation S60, sending the double encryption intermediate result to the second terminal, so that the second terminal calculates a double encryption gradient value based on the double encryption intermediate result.

Then, the double encryption intermediate result is sent to the second terminal, so that the second terminal calculates the double encryption gradient value based on the double encryption intermediate result, and the second terminal sends the double encryption gradient value to the first terminal.

Operation S70, when receiving the double encryption gradient value returned by the second terminal, decrypting the double encryption gradient value through a private key corresponding to the preset public key, and sending the decrypted double encryption gradient value to the second terminal, to enable the second terminal to decrypt the decrypted double encryption gradient value to obtain a gradient value of the second terminal.

When receiving the double encryption gradient value returned by the second terminal, the first terminal decrypts the double encryption gradient value once through a private key (i.e., the private key of the first terminal) corresponding to the preset public key, and sends the decrypted double encryption gradient value to the second terminal, such that the second terminal decrypts the decrypted double encryption gradient value twice through its private key (i.e., the private key of the second terminal) to obtain the gradient value of the second terminal. Thus, the second terminal may update the model parameter according to the gradient value of the second terminal.

In this embodiment, the first data and the second data communicated between the first terminal and the second terminal are all encrypted data of the intermediate result of the model, and there is no leakage of the original feature data. In addition, other data transmission processes are also encrypted, which can train the model parameter of the second terminal and determine the model parameter of the second terminal while ensuring the privacy and security of the terminal data.

Based on the foregoing embodiments, a third embodiment of the model parameter training method based on federation learning in the present disclosure is proposed.

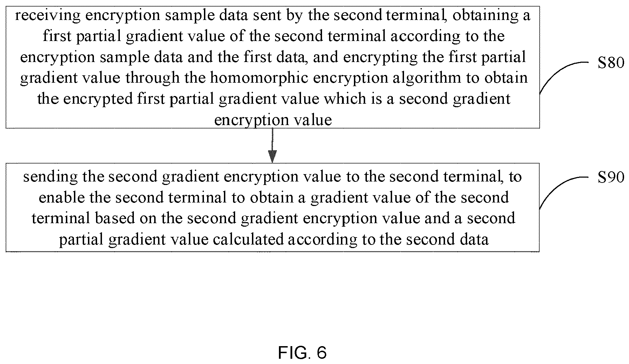

As shown in FIG. 6, in this embodiment, the model parameter training method based on federation learning further includes:

Operation S80, receiving encryption sample data sent by the second terminal, obtaining a first partial gradient value of the second terminal according to the encryption sample data and the first data, and encrypting the first partial gradient value through the homomorphic encryption algorithm to obtain the encrypted first partial gradient value, which is a second gradient encryption value.

As yet another way to obtain the gradient value of the second terminal, in this embodiment, the second terminal may send the encryption sample data to the first terminal, so that the first terminal calculates the partial gradient value of the second terminal according to the encryption sample data. Specifically, the first terminal receives the encryption sample data sent by the second terminal, and then obtains the first partial gradient value of the second terminal according to the encryption sample data and the first data obtained according to the encrypted second data, uses the public key of the second terminal to encrypt the first partial gradient value through a homomorphic encryption algorithm to obtain the encrypted first partial gradient value, which is the second gradient encrypted value.

Operation S90, sending the second gradient encryption value to the second terminal, to enable the second terminal to obtain a gradient value of the second terminal based on the second gradient encryption value and a second partial gradient value calculated according to the second data.

Then, the second gradient encryption value is sent to the second terminal, such that the second terminal obtains the gradient value of the second terminal based on the second gradient encryption value and the second partial gradient value calculated according to the second data. Specially, the second terminal calculates the second partial gradient value according to the second data, and decrypts the received second gradient encrypted value to obtain the first partial gradient value. Then, the first partial gradient value and the second partial gradient value are combined to obtain the gradient value of the second terminal, and the second terminal can update the model parameters according to the gradient value of the second terminal.

In this embodiment, the first terminal obtains a part of the gradient of the second terminal (that is, the first partial gradient value) through the received encryption sample data sent by the second terminal, then sends the encrypted first partial gradient value (that is, the second gradient encryption value) to the second terminal, such that after decryption by the second terminal, the first partial gradient value is obtained, thereby the first partial gradient value and the second partial gradient value (calculated locally by the second terminal) are further combined to obtain the gradient value of the second terminal, and the model parameters are updated according to the gradient value of the second terminal. In the above manner, this embodiment trains the model parameter of the second terminal to determine the model parameter of the second terminal, and since the data communicated by the first terminal and the second terminal are both encrypted, the privacy and security of the terminal data can be guaranteed.

Besides, it should be noted that, as another way of obtaining the gradient value of the second terminal, the same method as in the first embodiment may be used to calculate the gradient value of the second terminal. Specially, the first terminal sends the encrypted first data to the second terminal. When the second terminal receives the encrypted first data sent by the first terminal, obtaining the loss encryption value and the gradient encryption value of the second terminal according to the encrypted first data; randomly generating a random vector with same dimension as the gradient encryption value of the second terminal, blurring the gradient encryption value of the second terminal based on the random vector, and sending the blurred gradient encryption value of the second terminal and the loss encryption value of the second terminal to the first terminal; when receiving a decrypted gradient value and a decrypted loss value of the second terminal returned by the first terminal based on the blurred gradient encryption value of the second terminal and the loss encryption value of the second terminal, detecting whether a model to be trained is in a convergent state according to the decrypted loss value of the second terminal; and if the model to be trained is in the convergent state, obtaining a gradient value of the second terminal according to the random vector and the decrypted gradient value of the second terminal, that is, remove the random vector in the decrypted gradient value of the second terminal to restore the true gradient value to obtain the gradient value of the second terminal, and then determining a sample parameter corresponding to the gradient value of the second terminal as a model parameter of the model to be trained. This process is basically similar to that in the above-mentioned first embodiment, and reference may be made to the above-mentioned first embodiment, which will not be repeated here.

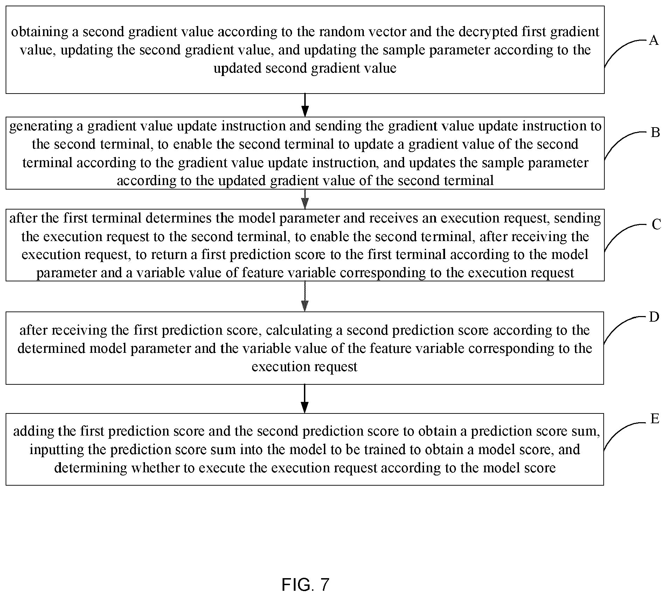

Further, based on the above embodiments, a fourth embodiment of the model parameter training method based on federation learning in the present disclosure is proposed. In this embodiment, after the operation S30, as shown in FIG. 7, the model parameter training method based on federation learning further includes:

If the model to be trained is in a non-convergent state, then performing operation A: obtaining a second gradient value according to the random vector and the decrypted first gradient value, updating the second gradient value, and updating the sample parameter according to the updated second gradient value.

In this embodiment, if the model to be trained is in a non-convergent state, that is, when the difference is greater than the preset threshold, the first terminal obtains the second gradient value according to the random vector and the decrypted first gradient value, that is, removes the random vector in the decrypted first gradient value to restore the true gradient value, to obtain the second gradient value, and then updates the second gradient value, and correspondingly updates the sample parameter according to the updated second gradient value.

The method for updating the sample parameter is: calculating the product of the updated second gradient value and the preset coefficient, and subtracting the product from the sample parameter to obtain the updated sample parameter. Specifically, the formula used by the first terminal to update its corresponding sample parameter according to the updated gradient value is: $w = w_0 - \eta g$. $w$ represents the sample parameter after the update, and $w_0$ represents the sample parameter before the update; $\eta$ is a coefficient, which is preset, that is, $\eta$ is a preset coefficient, and its corresponding value can be set according to specific needs; $g$ is the updated gradient value.

Operation B: generating a gradient value update instruction and sending the gradient value update instruction to the second terminal, to enable the second terminal to update a gradient value of the second terminal according to the gradient value update instruction, and updates the sample parameter according to the updated gradient value of the second terminal.

The first terminal generates a corresponding gradient value update instruction and sends the instruction to the second terminal, such that the second terminal updates the gradient value of the second terminal according to the gradient value update instruction, and updates the corresponding sample parameter according to the updated gradient value of the second terminal. The update method of the sample parameter of the second terminal is basically the same as the update method of the gradient value of the first terminal, and will not be repeated here.

It should be noted that the execution of operation B and operation A has no particular order.

Further, based on the above embodiments, a fifth embodiment of the model parameter training method based on federation learning in the present disclosure is proposed. in this embodiment, after the operation S30, the model parameter training method based on federation learning further includes:

Operation C, after the first terminal determines the model parameter and receives an execution request, sending the execution request to the second terminal, to enable the second terminal, after receiving the execution request, to return a first prediction score to the first terminal according to the model parameter and a variable value of feature variable corresponding to the execution request.

In this embodiment, after the first terminal determines the model parameters, the first terminal detects whether the execution request is received. After the first terminal receives the execution request, the first terminal sends the execution request to the second terminal. After the second terminal receives the execution request, the second terminal obtains its corresponding model parameter and obtains the variable value of the feature variable corresponding to the execution request. The first prediction score is calculated according to the model parameter and the variable value, and the first prediction score is sent to the first terminal. It is understandable that the formula for the first terminal to calculate the first prediction score is

$$w_A^T x_A = w_1 x_{i1} + w_2 x_{i2} \cdots w_n x_{in}.$$

Operation D, after receiving the first prediction score, calculating a second prediction score according to the determined model parameter and the variable value of the feature variable corresponding to the execution request.

After the first terminal receives the first prediction score sent by the second terminal, the first terminal calculates the second prediction score according to the determined model parameter and the variable value of the feature variable corresponding to the execution request. The formula for the first terminal to calculate the second prediction score is:

$$w_B^T x_B = w_1 x_{i1} + w_2 x_{i2} \cdots w_n x_{in}.$$

Operation E, adding the first prediction score and the second prediction score to obtain a prediction score sum, inputting the prediction score sum into the model to be trained to obtain a model score, and determining whether to execute the execution request according to the model score.

When the first terminal obtains the first prediction score and the second prediction score, the first terminal adds the first prediction score and the second prediction score to obtain the sum of the prediction scores, and inputs the sum of the prediction score into the model to be trained to obtain the model score. The expression for predicting the sum of scores is: $w^T x = w_A^T x_A + w_B^T x_B$. The expression of the model to be trained is: $P(y = 1 \| x) = \dfrac{1}{1 + \exp(-w^T x)}$.

After obtaining the model score, the first terminal can determine whether to execute the execution request according to the model score. For example, when the model to be trained is a fraud model and the execution request is a loan request, if the calculated model score is greater than or equal to the preset score, the first terminal determines that the loan request is a fraud request and refuses to execute the loan request; if the calculated model score is less than the preset score, the first terminal determines that the loan request is a real loan request, and executes the loan request.

In this embodiment, after receiving the execution request through the first terminal, the execution request is analyzed through the model to be trained to determine whether to execute the execution request, which improves the security during the process of executing the request by the first terminal.

The present disclosure further provides a model parameter training apparatus based on federation learning.

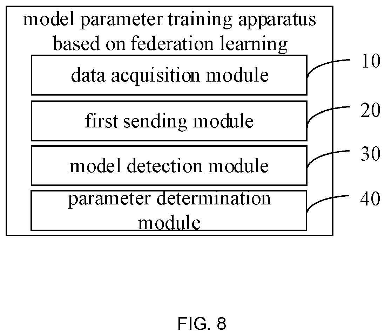

As shown in FIG. 8, FIG. 8 is a schematic diagram of functional modules of a model parameter training apparatus based on federation learning according to a first embodiment of the present disclosure.

The model parameter training apparatus based on federation learning includes:

a data acquisition module 10 configured to, when a first terminal receives encrypted second data sent by a second terminal, obtain a loss encryption value and a first gradient encryption value according to the encrypted second data;

a first sending module 20 configured to randomly generate a random vector with same dimension as the first gradient encryption value, blur the first gradient encryption value based on the random vector, and send the blurred first gradient encryption value and the loss encryption value to the second terminal;

a model detection module 30 configured to, when receiving a decrypted first gradient value and a decrypted loss value returned by the second terminal based on the blurred first gradient encryption value and the loss encryption value, detect whether a model to be trained is in a convergent state according to the decrypted loss value; and

a parameter determination module 40 configured to, if the model to be trained is in the convergent state, obtain a second gradient value according to the random vector and the decrypted first gradient value and determine a sample parameter corresponding to the second gradient value as a model parameter of the model to be trained.

Further, the data acquisition module 10 includes:

a first acquisition unit configured to, when the first terminal receives the encrypted second data sent by the second terminal, obtain first data and a sample label corresponding to the first data;

a first encryption unit configured to calculate a loss value based on the first data, the encrypted second data, the sample label, and a preset loss function, and encrypt the loss value through a homomorphic encryption algorithm to obtain the encrypted loss value, which is the loss encryption value; and

a second encryption unit configured to obtain a gradient function according to the preset loss function, calculate a first gradient value according to the gradient function, and encrypt the first gradient value through the homomorphic encryption algorithm to obtain the encrypted first gradient value, which is the first gradient encryption value.

Further, the model parameter training apparatus based on federation learning further includes:

a first encryption module configured to calculate an encryption intermediate result according to the encrypted second data and the first data, encrypt the encryption intermediate result with a preset public key, to obtain a double encryption intermediate result;

a first calculation module configured to send the double encryption intermediate result to the second terminal, so that the second terminal calculates a double encryption gradient value based on the double encryption intermediate result; and

a second decryption module configured to, when receiving the double encryption gradient value returned by the second terminal, decrypt the double encryption gradient value through a private key corresponding to the preset public key, and send the decrypted double encryption gradient value to the second terminal, to enable the second terminal to decrypt the decrypted double encryption gradient value to obtain a gradient value of the second terminal.

Further, the model parameter training apparatus based on federation learning further includes:

a second encryption module configured to receive encryption sample data sent by the second terminal, obtain a first partial gradient value of the second terminal according to the encryption sample data and the first data, and encrypt the first partial gradient value through the homomorphic encryption algorithm to obtain the encrypted first partial gradient value, which is a second gradient encryption value; and

a second sending module configured to send the second gradient encryption value to the second terminal, to enable the second terminal to obtain a gradient value of the second terminal based on the second gradient encryption value and a second partial gradient value calculated according to the second data.

Further, the model parameter training apparatus based on federation learning further includes:

a parameter updating module configured to, if the model to be trained is in a non-convergent state, obtain a second gradient value according to the random vector and the decrypted first gradient value, update the second gradient value, and update the sample parameter according to the updated second gradient value; and

an instruction sending module configured to generate a gradient value update instruction and send the gradient value update instruction to the second terminal, to enable the second terminal to update a gradient value of the second terminal according to the gradient value update instruction, and updates the sample parameter according to the updated gradient value of the second terminal.

Further, the model parameter training apparatus based on federation learning further includes:

a third sending module configured to, after the first terminal determines the model parameter and receives an execution request, send the execution request to the second terminal, to enable the second terminal, after receiving the execution request, to return a first prediction score to the first terminal according to the model parameter and a variable value of feature variable corresponding to the execution request;

a second calculation module configured to, after receiving the first prediction score, calculate a second prediction score according to the determined model parameter and the variable value of the feature variable corresponding to the execution request; and

a score acquisition module configured to add the first prediction score and the second prediction score to obtain a prediction score sum, input the prediction score sum into the model to be trained to obtain a model score, and determine whether to execute the execution request according to the model score.

Further, the model detection module 30 includes:

a second acquisition unit configured to obtain a first loss value previously obtained by the first terminal, and record the decrypted loss value as a second loss value;

a difference determination unit configured to calculate a difference between the first loss value and the second loss value, and determine whether the difference is less than or equal to a preset threshold;

a first determination unit configured to, when the difference is less than or equal to the preset threshold, determine that the model to be trained is in the convergent state; and

a second determination unit configured to, when the difference is greater than the preset threshold, determine that the model to be trained is in a non-convergent state.

The functions of each module in the above-mentioned model parameter training apparatus based on federation learning correspond to the operations in the embodiment of the above-mentioned model parameter training method based on federation learning, and their functions and implementation processes will not be repeated here.

The present disclosure further provides a storage medium. A model parameter training program based on federation learning is stored on the storage medium, and the model parameter training program based on federation learning, when executed by a processor, implements the operations of the model parameter training method based on federation learning of any one of the above embodiments.

The specific embodiments of the storage medium of the present disclosure are basically the same as the foregoing embodiments of the model parameter training method based on federation learning, and will not be repeated here.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The serial numbers of the foregoing embodiments of the present disclosure are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present disclosure can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, an air conditioner, or a network device, etc.) to execute the method described in each embodiment of the present disclosure.

The above are only some embodiments of the present disclosure, and do not limit the scope of the present disclosure thereto. Under the inventive concept of the present disclosure, equivalent structural transformations made according to the description and drawings of the present disclosure, or direct/indirect application in other related technical fields are included in the scope of the present disclosure.

"including a..." does not exclude the existence of other identical elements in the process, method, article or system that includes the element.

The serial numbers of the foregoing embodiments of the present disclosure are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present disclosure can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, an air conditioner, or a network device, etc.) to execute the method described in each embodiment of the present disclosure.

The above are only some embodiments of the present disclosure, and do not limit the scope of the present disclosure thereto. Under the inventive concept of the present disclosure, equivalent structural transformations made according to the description and drawings of the present disclosure, or direct/indirect application in other related technical fields are included in the scope of the present disclosure.

**Claims**

1. A model parameter training method based on federation learning, wherein the model parameter training is carried out without a trusted third party by a first terminal and a second terminal, thereby only using data from the first terminal and the second terminal, the method comprising the following operations:

   when the first terminal receives encrypted second data sent by the second terminal, obtaining a loss encryption value and a first gradient encryption value according to the encrypted second data;
   randomly generating a random vector with same dimension as the first gradient encryption value, blurring the first gradient encryption value based on the random vector, and sending the blurred first gradient encryption value and the loss encryption value to the second terminal;
   when receiving a decrypted first gradient value and a decrypted loss value returned by the second terminal based on the blurred first gradient encryption value and the loss encryption value, detecting whether a model to be trained is in a convergent state according to the decrypted loss value; and
   if the model to be trained is in the convergent state, obtaining a second gradient value according to the random vector and the decrypted first gradient value and determining a sample parameter corresponding to the second gradient value as a model parameter of the model to be trained.

2. The model parameter training method based on federation learning of claim 1, wherein the operation of when a first terminal receives encrypted second data sent by a second terminal, obtaining a loss encryption value and a first gradient encryption value according to the encrypted second data comprises:

   when the first terminal receives the encrypted second data sent by the second terminal, obtaining first data and a sample label corresponding to the first data;
   calculating a loss value based on the first data, the encrypted second data, the sample label, and a preset loss function, and encrypting the loss value through a homomorphic encryption algorithm to obtain the encrypted loss value which is the loss encryption value; and
   obtaining a gradient function according to the preset loss function, calculating a first gradient value according to the gradient function, and encrypting the first gradient value through the homomorphic encryption algorithm to obtain the encrypted first gradient value which is the first gradient encryption value.

3. The model parameter training method based on federation learning of claim 2, further comprising:

   calculating an encryption intermediate result according to the encrypted second data and the first data, encrypting the encryption intermediate result with a preset public key, to obtain a double encryption intermediate result;
   sending the double encryption intermediate result to the second terminal, to enable the second terminal to calculate a double encryption gradient value based on the double encryption intermediate result; and
   when receiving the double encryption gradient value returned by the second terminal, decrypting the double encryption gradient value through a private key corresponding to the preset public key, and sending the decrypted double encryption gradient value to the second terminal, to enable the second terminal to decrypt the decrypted double encryption gradient value to obtain a gradient value of the second terminal.

4. The model parameter training method based on federation learning of claim 2, further comprising:

   receiving encryption sample data sent by the second terminal, obtaining a first partial gradient value of the second terminal according to the encryption sample data and the first data, and encrypting the first partial gradient value through the homomorphic encryption algorithm to obtain the encrypted first partial gradient value which is a second gradient encryption value; and
   sending the second gradient encryption value to the second terminal, to enable the second terminal to obtain a gradient value of the second terminal based on the second gradient encryption value and a second partial gradient value calculated according to the second data.

5. The model parameter training method based on federation learning of claim 3, wherein after the operation of detecting whether a model to be trained is in a convergent state according to the decrypted loss value, the method further comprises:

if the model to be trained is in a non-convergent state, obtaining a second gradient value according to the random vector and the decrypted first gradient value, updating the second gradient value, and updating the sample parameter according to the updated second gradient value; and

generating a gradient value update instruction and sending the gradient value update instruction to the second terminal, to enable the second terminal to update a gradient value of the second terminal according to the gradient value update instruction, and update the sample parameter according to the updated gradient value of the second terminal.

6. The model parameter training method based on federation learning of claim 1, wherein after the operation of obtaining a second gradient value according to the random vector and the decrypted first gradient value and determining a sample parameter corresponding to the second gradient value as a model parameter of the model to be trained, the method further comprises:

after the first terminal determines the model parameter and receives an execution request, sending the execution request to the second terminal, to enable the second terminal, after receiving the execution request, to return a first prediction score to the first terminal according to the model parameter and a variable value of feature variable corresponding to the execution request;

after receiving the first prediction score, calculating a second prediction score according to the determined model parameter and the variable value of the feature variable corresponding to the execution request; and

adding the first prediction score and the second prediction score to obtain a prediction score sum, inputting the prediction score sum into the model to be trained to obtain a model score, and determining whether to execute the execution request according to the model score.

7. The model parameter training method based on federation learning of claim 1, wherein the operation of detecting whether a model to be trained is in a convergent state according to the decrypted loss value comprises:

obtaining a first loss value previously obtained by the first terminal, and recording the decrypted loss value as a second loss value;

calculating a difference between the first loss value and the second loss value, and determining whether the difference is less than or equal to a preset threshold;

when the difference is less than or equal to the preset threshold, determining that the model to be trained is in the convergent state; and

when the difference is greater than the preset threshold, determining that the model to be trained is in a non-convergent state.

8. A model parameter training apparatus based on federation learning, wherein the model parameter training is carried out without a trusted third party by a first terminal and a second terminal, thereby only using data from the first terminal and the second terminal, apparatus comprising:

a data acquisition module configured to, when the first terminal receives encrypted second data sent by the second terminal, obtain a loss encryption value and a first gradient encryption value according to the encrypted second data;

a first sending module configured to randomly generate a random vector with same dimension as the first gradient encryption value, blur the first gradient encryption value based on the random vector, and send the blurred first gradient encryption value and the loss encryption value to the second terminal;

a model detection module configured to, when receiving a decrypted first gradient value and a decrypted loss value returned by the second terminal based on the blurred first gradient encryption value and the loss encryption value, detect whether a model to be trained is in a convergent state according to the decrypted loss value; and

a parameter determination module configured to, if the model to be trained is in the convergent state, obtain a second gradient value according to the random vector and the decrypted first gradient value and determine a sample parameter corresponding to the second gradient value as a model parameter of the model to be trained.

9. The model parameter training apparatus based on federation learning of claim 8, wherein the data acquisition module includes:

a first acquisition unit configured to, when the first terminal receives the encrypted second data sent by the second terminal, obtain first data and a sample label corresponding to the first data;

a first encryption unit configured to calculate a loss value based on the first data, the encrypted second data, the sample label, and a preset loss function, and encrypt the loss value through a homomorphic encryption algorithm to obtain the encrypted loss value which is the loss encryption value; and

a second encryption unit configured to obtain a gradient function according to the preset loss function, calculate a first gradient value according to the gradient function, and encrypt the first gradient value through the homomorphic encryption algorithm to obtain the encrypted first gradient value which is the first gradient encryption value.

10. The model parameter training apparatus based on federation learning of claim 9, further comprising:

a first encryption module configured to calculate an encryption intermediate result according to the encrypted second data and the first data, encrypt the encryption intermediate result with a preset public key, to obtain a double encryption intermediate result;

a first calculation module configured to send the double encryption intermediate result to the second terminal, to enable the second terminal to calculate a double encryption gradient value based on the double encryption intermediate result; and

a second decryption module configured to, when receiving the double encryption gradient value returned by the second terminal, decrypt the double encryption gradient value through a private key corresponding to the preset public key, and send the decrypted double encryption gradient value to the second terminal, to enable the second terminal to decrypt the decrypted double encryption gradient value to obtain a gradient value of the second terminal.

11. The model parameter training apparatus based on federation learning of claim 9, further comprising:

a second encryption module configured to receive encryption sample data sent by the second terminal, obtain a first partial gradient value of the second terminal according to the encryption sample data and the first data, and encrypt the first partial gradient value through the homomorphic encryption algorithm to obtain the encrypted first partial gradient value which is a second gradient encryption value; and

a second sending module configured to send the second gradient encryption value to the second terminal, to enable the second terminal to obtain a gradient value of the second terminal based on the second gradient encryption value and a second partial gradient value calculated according to the second data.

12. The model parameter training apparatus based on federation learning of claim 10, further comprising:

a parameter updating module configured to, if the model to be trained is in a non-convergent state, obtain a second gradient value according to the random vector and the decrypted first gradient value, update the second gradient value, and update the sample parameter according to the updated second gradient value; and

an instruction sending module configured to generate a gradient value update instruction and send the gradient value update instruction to the second terminal, to enable the second terminal to update a gradient value of the second terminal according to the gradient value update instruction, and update the sample parameter according to the updated gradient value of the second terminal.

13. The model parameter training apparatus based on federation learning of claim 10, further comprising:

a third sending module configured to, after the first terminal determines the model parameter and receives an execution request, send the execution request to the second terminal, to enable the second terminal, after receiving the execution request, to return a first prediction score to the first terminal according to the model parameter and a variable value of feature variable corresponding to the execution request;

a second calculation module configured to, after receiving the first prediction score, calculate a second prediction score according to the determined model parameter and the variable value of the feature variable corresponding to the execution request; and

a score acquisition module configured to add the first prediction score and the second prediction score to obtain a prediction score sum, input the prediction score sum into the model to be trained to obtain a model score, and determine whether to execute the execution request according to the model score.

14. A model parameter training device based on federation learning, comprising: a memory, a processor, and a model parameter training program based on federation learning stored on the memory and executable on the processor, the model parameter training program based on federation learning, when executed by the processor, implements operations of the model parameter training method based on federation learning of any one of claims 1 to 7.

15. A storage medium, wherein a model parameter training program based on federation learning is stored on the storage medium, and the model parameter training program based on federation learning, when executed by a processor, implements operations of the model parameter training method based on federation learning of any one of claims 1 to 7.

**Patentansprüche**

1. Verfahren zum Trainieren von Modellparametern auf der Grundlage von Föderationslernen, wobei das Trainieren von Modellparametern ohne eine vertrauenswürdige dritte Partei durch ein erstes Endgerät und ein zweites Endgerät durchgeführt wird, wodurch nur Daten aus dem ersten Endgerät und dem zweiten Endgerät verwendet werden, wobei das Verfahren die folgenden Operationen umfasst:

    Erhalten eines Verlustverschlüsselungswerts und eines ersten Gradientenverschlüsselungswerts gemäß den verschlüsselten zweiten Daten, wenn das erste Endgerät verschlüsselte zweite Daten empfängt, die vom zweiten Endgerät gesendet wurden,
    zufälliges Erzeugen eines Zufallsvektors mit derselben Dimension wie der erste Gradientenverschlüsselungswert, Verwischen des ersten Gradientenverschlüsselungswertes auf der Grundlage des Zufallsvektors und Senden des verwischten ersten Gradientenverschlüsselungswertes und des Verlustverschlüsselungswertes an das zweite Endgerät,
    beim Empfangen eines entschlüsselten ersten Gradientenwerts und eines entschlüsselten Verlustwerts, die von dem zweiten Endgerät auf der Grundlage des unscharfen ersten Gradientenverschlüsselungswerts und des Verlustverschlüsselungswerts zurückgegeben werden, Erkennen, ob sich ein zu trainierendes Modell in einem konvergenten Zustand gemäß dem entschlüsselten Verlustwert befindet, und
    Erhalten eines zweiten Gradientenwertes gemäß dem Zufallsvektor und dem entschlüsselten ersten Gradientenwert und Bestimmen eines dem zweiten Gradientenwert entsprechenden Probenparameters als Modellparameter des zu trainierenden Modells, wenn sich das zu trainierende Modell im konvergenten Zustand befindet.

2. Verfahren zum Trainieren von Modellparametern auf der Grundlage von Föderationslernen nach Anspruch 1, wobei der Vorgang, wenn das erste Endgerät verschlüsselte zweite Daten empfängt, die vom zweiten Endgerät gesendet wurden, Erhalten eines Verlustverschlüsselungswerts und eines ersten Gradientenverschlüsselungswerts gemäß den verschlüsselten zweiten Daten umfasst:

    wenn das erste Endgerät die vom zweiten Endgerät gesendeten verschlüsselten zweiten Daten empfängt, Erhalten erster Daten und eines den ersten Daten entsprechenden Probenetiketts;
    Berechnen eines Verlustwertes auf der Grundlage der ersten Daten, der verschlüsselten zweiten Daten, des Probenetiketts und einer voreingestellten Verlustfunktion, und Verschlüsseln des Verlustwertes durch einen homomorphen Verschlüsselungsalgorithmus, um den verschlüsselten Verlustwert zu erhalten, der der Verlustverschlüsselungswert ist, und
    Erhalten einer Gradientenfunktion gemäß der voreingestellten Verlustfunktion, Berechnen eines ersten Gradientenwertes gemäß der Gradientenfunktion und Verschlüsseln des ersten Gradientenwertes durch den homomorphen Verschlüsselungsalgorithmus, um den verschlüsselten ersten Gradientenwert zu erhalten, der der erste Gradientenverschlüsselungswert ist.

3. Verfahren zum Trainieren von Modellparametern auf der Grundlage von Föderationslernen nach Anspruch 2, wobei es ferner umfasst:

    Berechnen eines Verschlüsselungszwischenergebnisses entsprechend den verschlüsselten zweiten Daten und den ersten Daten, Verschlüsseln des Verschlüsselungszwischenergebnisses mit einem voreingestellten öffentlichen Schlüssel, um ein doppeltes Verschlüsselungszwischenergebnis zu erhalten,
    Senden des doppelten Verschlüsselungszwischenergebnisseses an das zweite Endgerät, um das zweite Endgerät in die Lage zu versetzen, einen doppelten Verschlüsselungsgradientenwert basierend auf dem doppelten Verschlüsselungszwischenergebnisse zu berechnen; und
    wenn der vom zweiten Endgerät zurückgegebene doppelte Verschlüsselungsgradientenwerte empfangen wird, Entschlüsseln des doppelten Verschlüsselungsgradientenwertes durch einen privaten Schlüssel, der dem voreingestellten öffentlichen Schlüssel entspricht, und Senden des entschlüsselten doppelten Verschlüsselungsgradientenwerts an das zweite Endgerät, damit das zweite Endgerät den entschlüsselten doppelten Gradientenverschlüsselungswert entschlüsseln kann, um einen Gradientenwert des zweiten Endgeräts zu erhalten.

4. Verfahren zum Trainieren von Modellparametern auf der Grundlage von Föderationslernen nach Anspruch 2, wobei es ferner umfasst:

Empfangen von Verschlüsselungs-Beispieldaten, die von dem zweiten Endgerät gesendet werden, Erhalten eines ersten partiellen Gradientenwertes des zweiten Endgerätes gemäß den Verschlüsselungs-Beispieldaten und den ersten Daten, und Verschlüsseln des ersten partiellen Gradientenwertes durch den homomorphen Verschlüsselungsalgorithmus, um den verschlüsselten ersten partiellen Gradientenwert zu erhalten, der ein zweiter Gradientenverschlüsselungswert ist, und
Senden des zweiten Gradientenverschlüsselungswerts an das zweite Endgerät, um dem zweiten Endgerät zu ermöglichen, einen Gradientenwert des zweiten Endgeräts auf der Grundlage des zweiten Gradientenverschlüsselungswerts und eines zweiten partiellen Gradientenwerts, der gemäß den zweiten Daten berechnet wurde, zu erhalten.

5. Verfahren zum Trainieren von Modellparametern auf der Grundlage von Föderationslernen nach Anspruch 3, das Verfahren nach dem Vorgang des Erkennens, ob sich ein zu trainierendes Modell in einem konvergenten Zustand gemäß dem entschlüsselten Verlustwert befindet, ferner umfasst:

wenn das zu trainierende Modell in einem nicht-konvergenten Zustand ist, Erhalten eines zweiten Gradientenwertes gemäß dem Zufallsvektor und dem entschlüsselten ersten Gradientenwert, Aktualisieren des zweiten Gradientenwertes und Aktualisieren des Probenparameters gemäß dem aktualisierten zweiten Gradientenwert, und
Erzeugen eines Gradientenwert-Aktualisierungsbefehls und Senden des Gradientenwert-Aktualisierungsbefehls an das zweite Endgerät, um das zweite Endgerät in die Lage zu versetzen, einen Gradientenwert des zweiten Endgeräts gemäß dem Gradientenwert-Aktualisierungsbefehl zu aktualisieren und den Probenparameter gemäß dem aktualisierten Gradientenwert des zweiten Endgeräts zu aktualisieren.

6. Verfahren zum Trainieren von Modellparametern auf der Grundlage von Föderationslernen nach Anspruch 1, wobei das Verfahren nach dem Vorgang des Erhaltens eines zweiten Gradientenwertes gemäß dem Zufallsvektor und dem entschlüsselten ersten Gradientenwert und Bestimmen eines dem zweiten Gradientenwert entsprechenden Probenparameters als Modellparameter des zu trainierenden Modells, ferner umfasst:

nachdem das erste Endgerät den Modellparameter bestimmt und eine Ausführungsanforderung empfängt, Senden der Ausführungsanforderung an das zweite Endgerät, damit das zweite Endgerät nach dem Empfang der Ausführungsanforderung eine erste Vorhersagebewertung an das erste Endgerät gemäß dem Modellparameter und einem variablen Wert einer Merkmalsvariablen entsprechend der Ausführungsanforderung zurückgibt;
nach dem Empfangen des ersten Vorhersagebewertung, Berechnen einer zweiten Vorhersagebewertung gemäß dem bestimmten Modellparameter und dem variablen Wert der Merkmalsvariablen entsprechend der Ausführungsanforderung; und
Addieren der ersten Vorhersagebewertung und der zweiten Vorhersagebewertung, um eine Vorhersagebewertungssumme zu erhalten, Eingeben der Vorhersagebewertungssumme in das zu trainierende Modell, um eine Modellbewertung zu erhalten, und Bestimmen, ob die Ausführungsanforderung gemäß der Modellbewertung ausgeführt werden soll.

7. Verfahren zum Trainieren von Modellparametern auf der Grundlage von Föderationslernen nach Anspruch 1, wobei der Vorgang des Erkennens, ob sich ein zu trainierendes Modell in einem konvergenten Zustand gemäß dem entschlüsselten Verlustwert befindet umfasst:

Erhalten eines ersten Verlustwertes, der zuvor von dem ersten Endgerät erhalten wurde, und Aufzeichnen des entschlüsselten Verlustwertes als zweiten Verlustwert;
Berechnen einer Differenz zwischen dem ersten Verlustwert und dem zweiten Verlustwert und Bestimmen, ob die Differenz kleiner als oder gleich einem voreingestellten Schwellenwert ist,
wenn die Differenz kleiner oder gleich dem voreingestellten Schwellenwert ist, Bestimmen, dass sich das zu trainierende Modell im konvergenten Zustand befindet, und

wenn die Differenz größer ist als der voreingestellte Schwellenwert, Bestimmen, dass sich das zu trainierende Modell in einem nicht konvergenten Zustand befindet.

8. Vorrichtung zum Trainieren von Modellparametern auf der Grundlage von Föderationslernen, wobei das Trainieren von Modellparametern ohne eine vertrauenswürdige dritte Partei durch ein erstes Endgerät und ein zweites Endgerät durchgeführt wird, wodurch nur Daten aus dem ersten Endgerät und dem zweiten Endgerät verwendet werden, wobei die Vorrichtung umfasst:

ein Datenerfassungsmodul, das so konfiguriert ist, dass es, wenn das erste Endgerät verschlüsselte zweite Daten empfängt, die vom zweiten Endgerät gesendet wurden, einen Verlustverschlüsselungswert und einen ersten Gradientenverschlüsselungswert gemäß den verschlüsselten zweiten Daten erhält,

Ein erstes Sendemodul, das so konfiguriert ist, dass es zufällig einen Zufallsvektor mit derselben Dimension wie der erste Gradientenverschlüsselungswert erzeugt, den ersten Gradientenverschlüsselungswert auf der Grundlage des Zufallsvektors verwischt und den verwischten ersten Gradientenverschlüsselungswert und den Verlustverschlüsselungswert an das zweite Endgerät sendet,

Ein Modellerfassungsmodul, das so konfiguriert ist, dass es beim Empfangen eines entschlüsselten ersten Gradientenwerts und eines entschlüsselten Verlustwerts, die von dem zweiten Endgerät auf der Grundlage des unscharfen ersten Gradientenverschlüsselungswerts und des Verlustverschlüsselungswerts zurückgegeben werden, erkennt, ob sich ein zu trainierendes Modell in einem konvergenten Zustand befindet, entsprechend dem entschlüsselten Verlustwert; und

Ein Parameterbestimmungsmodul, das so konfiguriert ist, dass es, wenn sich das zu trainierende Modell im konvergenten Zustand befindet, einen zweiten Gradientenwert gemäß dem Zufallsvektor und dem entschlüsselten ersten Gradientenwert erhält und einen dem zweiten Gradientenwert entsprechenden Probenparameter als Modellparameter des zu trainierenden Modells bestimmt.

9. Vorrichtung zum Trainieren von Modellparametern auf der Grundlage von Föderationslernen nach Anspruch 8, wobei das Datenerfassungsmodul ferner umfasst:

Ein erstes Erfassungsmodul, das so konfiguriert ist, dass es, wenn das erste Endgerät die vom zweiten Endgerät gesendeten verschlüsselten zweiten Daten empfängt, erste Daten und ein den ersten Daten entsprechenden Probenetikett erhält,

Eine erste Verschlüsselungseinheit, die so konfiguriert ist, dass sie einen Verlustwert auf der Grundlage der ersten Daten, der verschlüsselten zweiten Daten, des Probenetiketts und einer voreingestellten Verlustfunktion berechnet und den Verlustwert durch einen homomorphen Verschlüsselungsalgorithmus verschlüsselt, um den verschlüsselten Verlustwert zu erhalten, der der Verlustverschlüsselungswert ist, und

Eine zweite Verschlüsselungseinheit, die konfiguriert ist, um eine Gradientenfunktion gemäß der voreingestellten Verlustfunktion zu erhalten, einen ersten Gradientenwert gemäß der Gradientenfunktion zu berechnen und den ersten Gradientenwert durch den homomorphen Verschlüsselungsalgorithmus zu verschlüsseln, um den verschlüsselten ersten Gradientenwert zu erhalten, der der erste Gradientenverschlüsselungswert ist.

10. Vorrichtung zum Trainieren von Modellparametern auf der Grundlage von Föderationslernen nach Anspruch 9, wobei es ferner umfasst:

Ein erstes Verschlüsselungsmodul, das es konfiguriert ist, dass es ein Verschlüsselungszwischenergebniss entsprechend den verschlüsselten zweiten Daten und den ersten Daten berechnet, das Verschlüsselungszwischenergebniss mit einem voreingestellten öffentlichen Schlüssel verschlüsselt, um ein doppeltes Verschlüsselungszwischenergebnis zu erhalten,

Ein ersten Berechnungsmodul, das so konfiguriert ist, dass es das doppelte Verschlüsselungszwischenergebnisses an das zweite Endgerät sendet, um das zweite Endgerät in die Lage zu versetzen, einen doppelten Verschlüsselungsgradientenwert basierend auf dem doppelten Verschlüsselungszwischenergebnisse zu berechnen; und

Ein zweites Entschlüsselungsmodul, das so konfiguriert ist, dass es, wenn der vom zweiten Endgerät zurückgegebene doppelte Verschlüsselungsgradientenwerte empfangen wird, den doppelten Verschlüsselungsgradientenwert durch einen privaten Schlüssel entschlüsselt, der dem voreingestellten öffentlichen Schlüssel entspricht, und dass es den entschlüsselten doppelten Verschlüsselungsgradientenwert an das zweite Endgerät sendet, damit das zweite Endgerät den entschlüsselten doppelten Gradientenverschlüsselungswert entschlüsseln kann, um einen Gradientenwert des zweiten Endgeräts zu erhalten.

**11.** Vorrichtung zum Trainieren von Modellparametern auf der Grundlage von Föderationslernen nach Anspruch 9, wobei es ferner umfasst:

ein zweites Verschlüsselungsmodul, das so konfiguriert ist, dass es von Verschlüsselungs-Beispieldaten, die von dem zweiten Endgerät gesendet werden, empfängt, einen ersten partiellen Gradientenwert des zweiten Endgerätes gemäß den Verschlüsselungs-Beispieldaten und den ersten Daten erhält, und den ersten partiellen Gradientenwert durch den homomorphen Verschlüsselungsalgorithmus verschlüsselt, um den verschlüsselten ersten partiellen Gradientenwert zu erhalten, der ein zweiter Gradientenverschlüsselungswert ist, und
Ein zweites Sendemodul, das so konfiguriert ist, dass es den zweiten Gradientenverschlüsselungswert an das zweite Endgerät sendet, um es dem zweiten Endgerät zu ermöglichen, einen Gradientenwert des zweiten Endgeräts auf der Grundlage des zweiten Gradientenverschlüsselungswerts und eines zweiten partiellen Gradientenwerts, der gemäß den zweiten Daten berechnet wurde, zu erhalten.

**12.** Vorrichtung zum Trainieren von Modellparametern auf der Grundlage von Föderationslernen nach Anspruch 10, wobei es ferner umfasst:

Ein Parameteraktualisierungsmodul, das so konfiguriert ist, dass es, wenn das zu trainierende Modell in einem nicht-konvergenten Zustand ist, einen zweiten Gradientenwert gemäß dem Zufallsvektor und dem entschlüsselten ersten Gradientenwert erhält, den zweiten Gradientenwert aktualisiert und den Probenparameter gemäß dem aktualisierten zweiten Gradientenwert aktualisiert; und
ein Befehlssendemodul, das so konfiguriert ist, dass es einen Gradientenwert-Aktualisierungsbefehl erzeugt und den Gradientenwert-Aktualisierungsbefehl an das zweite Endgerät sendet, um das zweite Endgerät in die Lage zu versetzen, einen Gradientenwert des zweiten Endgeräts gemäß dem Gradientenwert-Aktualisierungsbefehl zu aktualisieren und den Probenparameter gemäß dem aktualisierten Gradientenwert des zweiten Endgeräts zu aktualisieren.

**13.** Vorrichtung zum Trainieren von Modellparametern auf der Grundlage von Föderationslernen nach Anspruch 10, wobei es ferner umfasst:

Ein drittes Sendemodul, das so konfuguriert ist, dass es, nachdem das erste Endgerät den Modellparameter bestimmt und eine Ausführungsanforderung empfängt, die Ausführungsanforderung an das zweite Endgerät sendet, damit das zweite Endgerät nach dem Empfang der Ausführungsanforderung eine erste Vorhersagebewertung an das erste Endgerät gemäß dem Modellparameter und einem variablen Wert einer Merkmalsvariablen entsprechend der Ausführungsanforderung zurückgibt;
ein zweites Berechnungsmodul, das so konfiguriert ist, dass nach dem Empfangen des ersten Vorhersagebewertung, eine zweite Vorhersagebewertung gemäß dem bestimmten Modellparameter und dem variablen Wert der Merkmalsvariablen entsprechend der Ausführungsanforderung berechnet, und
Ein Bewertungserfassungsmodul, das so konfuguriert ist, dass es die erste Vorhersagebewertung und die zweite Vorhersagebewertung addiert, um eine Vorhersagebewertungssumme zu erhalten, und dass es die Vorhersagebewertungssumme in das zu trainierende Modell eingibt, um eine Modellbewertung zu erhalten, und dass es bestimmt, ob die Ausführungsanforderung gemäß der Modellbewertung ausgeführt werden soll.

**14.** Gerät zum Trainieren von Modellparametern auf der Grundlage von Föderationslernen, wobei es einen Speicher, einen Prozessor und ein Modellparameter-Trainingsprogramm auf der Grundlage von Föderationslernen umfasst, das in dem Speicher gespeichert und auf dem Prozessor ausführbar ist, wobei das Modellparameter-Trainingsprogramm auf der Grundlage von Föderationslernen, wenn es von dem Prozessor ausgeführt wird, Vorgänge des Verfahren zum Trainieren von Modellparametern auf der Grundlage von Föderationslernen nach einem der Ansprüche 1 bis 7 implementiert.

**15.** Speichermedium, wobei auf dem Speichermedium ein Modellparameter-Trainingsprogramm auf der Grundlage von Föderationslernen gespeichert ist und das Modellparameter-Trainingsprogramm auf der Grundlage von Föderationslernen, wenn es von einem Prozessor ausgeführt wird, Vorgänge des Verfahren zum Trainieren von Modellparametern auf der Grundlage von Föderationslernen nach einem der Ansprüche 1 bis 7 implementiert.

**Revendications**

**1.** Procédé d'entraînement de paramètres de modèle sur la base d'apprentissage par fédération, dans lequel l'entraînement de paramètres de modèle est mise en oeuvre sans tiers de confiance par un premier terminal et un deuxième terminal, utilisant ainsi seulement des données du premier terminal et du deuxième terminal, le procédé comprenant les opérations suivantes :

lorsque le premier terminal reçoit une deuxième donnée chiffrée envoyée par le deuxième terminal, obtenir une valeur de chiffrement de perte et une première valeur de chiffrement de gradient en fonction de la deuxième donnée chiffrée ;

générer de manière aléatoire un vecteur aléatoire ayant une dimension identique à la première valeur de chiffrement de gradient, brouiller la première valeur de chiffrement de gradient sur la base du vecteur aléatoire et envoyer la première valeur de chiffrement de gradient brouillée et la valeur de chiffrement de perte au deuxième terminal ;

lorsqu'une première valeur de gradient déchiffrée et une valeur de perte déchiffrée renvoyées par le deuxième terminal sur la base de la première valeur de chiffrement de gradient brouillée et de la valeur de chiffrement de perte sont reçues, détecter si un modèle à entraîner est dans un état convergent en fonction de la valeur de perte déchiffrée ; et

si le modèle à entraîner est dans l'état convergent, obtenir une deuxième valeur de gradient en fonction du vecteur aléatoire et de la première valeur de gradient déchiffrée et déterminer un paramètre d'échantillon correspondant à la deuxième valeur de gradient comme paramètre de modèle du modèle à entraîner.

2. Procédé d'entraînement de paramètres de modèle sur la base d'apprentissage par fédération selon la revendication 1, dans lequel l'opération : lorsqu'un premier terminal reçoit une deuxième donnée chiffrée envoyée par un deuxième terminal, obtenir une valeur de chiffrement de perte et une première valeur de chiffrement de gradient en fonction de la deuxième donnée chiffrée comprend :

lorsque le premier terminal reçoit la deuxième donnée cryptée envoyée par le deuxième terminal, obtenir une première donnée et une étiquette d'échantillon correspondant à la première donnée ;

calculer une valeur de perte sur la base de la première donnée, de la deuxième donnée chiffrée, de l'étiquette d'échantillon et d'une fonction de perte prédéfinie, et chiffrer la valeur de perte par un algorithme de chiffrement homomorphe pour obtenir la valeur de perte chiffrée qui est la valeur de chiffrement de perte ; et

obtenir une fonction de gradient en fonction de la fonction de perte prédéfinie, calculer une première valeur de gradient en fonction de la fonction de gradient, et chiffrer la première valeur de gradient par l'algorithme de chiffrement homomorphe pour obtenir la première valeur de gradient chiffrée qui est la première valeur de chiffrement de gradient.

3. Procédé d'entraînement de paramètres de modèle sur la base d'apprentissage par fédération selon la revendication 2, comprenant en outre :

calculer un résultat intermédiaire de chiffrement en fonction de la deuxième donnée chiffrée et de la première donnée, et chiffrer le résultat intermédiaire de chiffrement avec une clé publique prédéfinie, afin d'obtenir un résultat intermédiaire de double chiffrement ;

envoyer le résultat intermédiaire de double chiffrement au deuxième terminal, afin de permettre au deuxième terminal de calculer une valeur de gradient de double chiffrement sur la base du résultat intermédiaire de double chiffrement ; et

une fois la valeur de gradient de double chiffrement renvoyée par le deuxième terminal reçue, déchiffrer la valeur de gradient de double chiffrement avec une clé privée correspondant à la clé publique prédéfinie et envoyer la valeur de gradient de double chiffrement déchiffrée au deuxième terminal, afin de permettre au deuxième terminal de déchiffrer la valeur de gradient de double chiffrement déchiffrée pour obtenir une valeur de gradient du deuxième terminal.

4. Procédé d'entraînement de paramètres de modèle sur la base d'apprentissage par fédération selon la revendication 2, comprenant en outre :

recevoir une donnée d'échantillon de chiffrement envoyée par le deuxième terminal, obtenir une première valeur de gradient partiel du deuxième terminal en fonction de la donnée d'échantillon de chiffrement et de la première donnée, et chiffrer la première valeur de gradient partiel par l'algorithme de chiffrement homomorphe pour obtenir la première valeur de gradient partiel chiffrée qui est une deuxième valeur de chiffrement de gradient ; et

envoyer la deuxième valeur de chiffrement de gradient au deuxième terminal, afin de permettre au deuxième terminal d'obtenir une valeur de gradient du deuxième terminal sur la base de la deuxième valeur de chiffrement de gradient et une deuxième valeur de gradient partiel calculée en fonction de la deuxième donnée.

5. Procédé d'entraînement de paramètres de modèle sur la base d'apprentissage par fédération selon la revendication 3, dans lequel, après l'opération de détecter si un modèle à entraîner est dans un état convergent en fonction de la valeur de perte déchiffrée, le procédé comprend en outre :

si le modèle à entraîner est dans un état non-convergent, obtenir une deuxième valeur de gradient en fonction du vecteur aléatoire et de la première valeur de gradient déchiffrée et mettre à jour le paramètre d'échantillon en fonction de la deuxième valeur de gradient mise à jour ; et

générer une instruction de mise à jour de la valeur de gradient et envoyer l'instruction de mise à jour de la valeur de gradient au deuxième terminal, afin de permettre au deuxième terminal de mettre à jour une valeur de gradient du deuxième terminal en fonction de l'instruction de mise à jour de la valeur de gradient, et de mettre à jour le paramètre d'échantillon en fonction de la valeur de gradient mise à jour du deuxième terminal.

6. Procédé d'entraînement de paramètres de modèle sur la base d'apprentissage par fédération selon la revendication 1, dans lequel, après l'opération d'obtenir une deuxième valeur de gradient en fonction du vecteur aléatoire et de la première valeur de gradient déchiffrée et déterminer un paramètre d'échantillon correspondant à la deuxième valeur de gradient comme paramètre de modèle du modèle à entraîner, le procédé comprend en outre :

après que le premier terminal a déterminé le paramètre de modèle et reçu une demande d'exécution, envoyer la demande d'exécution au deuxième terminal, afin de permettre au deuxième terminal, après avoir reçu la demande d'exécution, de renvoyer un premier score de prédiction au premier terminal en fonction du paramètre de modèle et d'une valeur variable d'une variable de caractéristique correspondant à la demande d'exécution ;

après avoir reçu le premier score de prédiction, calculer un deuxième score de prédiction en fonction du paramètre de modèle déterminé et de la valeur variable de la variable de caractéristique correspondant à la demande d'exécution ; et

sommer le premier score de prédiction et le deuxième score de prédiction pour obtenir une somme de scores de prédiction, saisir la somme de scores de prédiction dans le modèle à entraîner pour obtenir un score de modèle et déterminer une nécessité d'exécution de la demande d'exécution en fonction du score du modèle.

7. Procédé d'entraînement de paramètres de modèle sur la base d'apprentissage par fédération selon la revendication 1, dans lequel l'opération de détecter si un modèle à entraîner est dans un état convergent en fonction de la valeur de perte déchiffrée comprend :

obtenir une première valeur de perte précédemment obtenue par le premier terminal, et enregistrer la valeur de perte déchiffrée comme deuxième valeur de perte ;

calculer une différence entre la première valeur de perte et la deuxième valeur de perte, et déterminer si la différence est inférieure ou égale à un seuil prédéfini ;

lorsque la différence est inférieure ou égale au seuil prédéfini, déterminer que le modèle à entraîner est dans l'état convergent ; et

lorsque la différence est supérieure au seuil prédéfini, ce qui détermine que le modèle à entraîner est dans un état non convergent.

8. Appareil d'entraînement de paramètres de modèle sur la base d'apprentissage par fédération, dans lequel l'entraînement de paramètres de modèle est mise en oeuvre sans tiers de confiance par un premier terminal et un deuxième terminal, utilisant ainsi seulement des données du premier terminal et du deuxième terminal, l'appareil comprenant :

un module d'acquisition de données configuré pour, lorsque le premier terminal reçoit une deuxième donnée chiffrée envoyée par le deuxième terminal, obtenir une valeur de chiffrement de perte et une première valeur de chiffrement de gradient en fonction de la deuxième donnée chiffrée ;

un premier module d'envoi configuré pour générer de manière aléatoire un vecteur aléatoire ayant une dimension identique à la première valeur de chiffrement de gradient, brouiller la première valeur de chiffrement de gradient sur la base du vecteur aléatoire et envoyer la première valeur de chiffrement de gradient brouillée et la valeur de chiffrement de perte au deuxième terminal ;

un module de détection de modèle configuré pour, lorsqu'une première valeur de gradient déchiffrée et une valeur de perte déchiffrée renvoyées par le deuxième terminal sur la base de la première valeur de chiffrement de gradient brouillée et de la valeur de chiffrement de perte sont reçues, détecter si un modèle à entraîner est dans un état convergent en fonction de la valeur de perte déchiffrée ; et

un module de détermination de paramètres configuré pour, si le modèle à entraîner est dans l'état convergent, obtenir une deuxième valeur de gradient en fonction du vecteur aléatoire et de la première valeur de gradient déchiffrée et déterminer un paramètre d'échantillon correspondant à la deuxième valeur de gradient comme paramètre de modèle du modèle à entraîner.

**9.** Appareil d'entraînement de paramètres de modèle sur la base d'apprentissage par fédération selon la revendication 8, dans lequel le module d'acquisition de données comprend :

une première unité d'acquisition configurée pour, lorsque le premier terminal reçoit la deuxième donnée cryptée envoyée par le deuxième terminal, obtenir une première donnée et une étiquette d'échantillon correspondant à la première donnée ;

une première unité de chiffrement configurée pour calculer une valeur de perte sur la base de la première donnée, de la deuxième donnée chiffrée, de l'étiquette d'échantillon et d'une fonction de perte prédéfinie, et chiffrer la valeur de perte par un algorithme de chiffrement homomorphe pour obtenir la valeur de perte chiffrée qui est la valeur de chiffrement de perte ; et

une deuxième unité de chiffrement configurée pour obtenir une fonction de gradient en fonction de la fonction de perte prédéfinie, calculer une première valeur de gradient en fonction de la fonction de gradient, et chiffrer la première valeur de gradient par l'algorithme de chiffrement homomorphe pour obtenir la première valeur de gradient chiffrée qui est la première valeur de chiffrement de gradient.

**10.** Appareil d'entraînement de paramètres de modèle sur la base d'apprentissage par fédération selon la revendication 9, comprenant en outre :

un premier module de chiffrement configuré pour calculer un résultat intermédiaire de chiffrement en fonction de la deuxième donnée chiffrée et de la première donnée, chiffrer le résultat intermédiaire de chiffrement avec une clé publique prédéfinie, afin d'obtenir un résultat intermédiaire de double chiffrement ;

un premier module de calcul configuré pour envoyer le résultat intermédiaire de double chiffrement au deuxième terminal, afin de permettre au deuxième terminal de calculer une valeur de gradient de double chiffrement sur la base du résultat intermédiaire de double chiffrement ; et

un deuxième module de chiffrement configuré pour, une fois la valeur de gradient de double chiffrement renvoyée par le deuxième terminal reçue, déchiffrer la valeur de gradient de double chiffrement avec une clé privée correspondant à la clé publique prédéfinie et envoyer la valeur de gradient de double chiffrement déchiffrée au deuxième terminal, afin de permettre au deuxième terminal de déchiffrer la valeur de gradient de double chiffrement déchiffrée pour obtenir une valeur de gradient du deuxième terminal.

**11.** Appareil d'entraînement de paramètres de modèle sur la base d'apprentissage par fédération selon la revendication 9, comprenant en outre :

un deuxième module de chiffrement configuré pour recevoir une donnée d'échantillon de chiffrement envoyée par le deuxième terminal, obtenir une première valeur de gradient partiel du deuxième terminal en fonction de la donnée d'échantillon de chiffrement et de la première donnée, et chiffrer la première valeur de gradient partiel par l'algorithme de chiffrement homomorphe pour obtenir la première valeur de gradient partiel chiffrée qui est une deuxième valeur de chiffrement de gradient ; et

un deuxième module d'envoi configuré pour envoyer la deuxième valeur de chiffrement de gradient au deuxième terminal, afin de permettre au deuxième terminal d'obtenir une valeur de gradient du deuxième terminal sur la base de la deuxième valeur de chiffrement de gradient et une deuxième valeur de gradient partiel calculée en fonction de la deuxième donnée.

**12.** Appareil d'entraînement de paramètres de modèle sur la base d'apprentissage par fédération selon la revendication 10, comprenant en outre :

un module de mise à jour de paramètres configuré pour, si le modèle à entraîner est dans un état non-convergent, obtenir une deuxième valeur de gradient en fonction du vecteur aléatoire et de la première valeur de gradient déchiffrée et mettre à jour le paramètre d'échantillon en fonction de la deuxième valeur de gradient mise à jour ; et

un module d'envoi d'instructions configuré pour générer une instruction de mise à jour de la valeur de gradient et envoyer l'instruction de mise à jour de la valeur de gradient au deuxième terminal, afin de permettre au deuxième terminal de mettre à jour une valeur de gradient du deuxième terminal en fonction de l'instruction de mise à jour de la valeur de gradient, et de mettre à jour le paramètre d'échantillon en fonction de la valeur de gradient mise à jour du deuxième terminal.

13. Appareil d'entraînement de paramètres de modèle sur la base d'apprentissage par fédération selon la revendication 10, comprenant en outre :

un troisième module d'envoi configuré pour, après que le premier terminal a déterminé le paramètre de modèle et reçu une demande d'exécution, envoyer la demande d'exécution au deuxième terminal, afin de permettre au deuxième terminal, après avoir reçu la demande d'exécution, de renvoyer un premier score de prédiction au premier terminal en fonction du paramètre de modèle et d'une valeur variable d'une variable de caractéristique correspondant à la demande d'exécution ;
un deuxième module de calcul configuré pour, après avoir reçu le premier score de prédiction, calculer un deuxième score de prédiction en fonction du paramètre de modèle déterminé et de la valeur variable de la variable de caractéristique correspondant à la demande d'exécution ; et
un module d'acquisition de scores configuré pour sommer le premier score de prédiction et le deuxième score de prédiction pour obtenir une somme de scores de prédiction, saisir la somme de scores de prédiction dans le modèle à entraîner pour obtenir un score de modèle et déterminer une nécessité d'exécution de la demande d'exécution en fonction du score du modèle.

14. Dispositif d'entraînement de paramètres de modèle sur la base d'apprentissage par fédération, comprenant : une mémoire, un processeur et un programme d'entraînement de paramètres de modèle sur la base d'apprentissage par fédération stocké sur la mémoire et exécutable sur le processeur, le programme d'entraînement de paramètres de modèle sur la base d'apprentissage par fédération, lorsqu'il est exécuté par le processeur, met en oeuvre des opérations du procédé d'entraînement de paramètres de modèle sur la base d'apprentissage par fédération selon l'une quelconque des revendications 1 à 7.

15. Support de stockage, dans lequel un programme d'entraînement de paramètres de modèle sur la base d'apprentissage par fédération est stocké sur le support de stockage, et le programme d'entraînement de paramètres de modèle sur la base d'apprentissage par fédération, lorsqu'il est exécuté par un processeur, met en oeuvre des opérations du procédé d'entraînement de paramètres de modèle sur la base d'apprentissage par fédération selon l'une quelconque des revendications 1 à 7.

1005

1001

processor

1002

user
interface

1003

network
interface

1004

operating system

network communication
module

user interface
module

model parameter training
program based on
federation learning

memory

FIG. 1

when a first terminal receives encrypted second data sent by a second terminal, obtaining a loss encryption value and a first gradient encryption value according to the encrypted second data — S10

randomly generating a random vector with same dimension as the first gradient encryption value, blurring the first gradient encryption value based on the random vector, and sending the blurred first gradient encryption value and the loss encryption value to the second terminal — S20

when receiving a decrypted first gradient value and a decrypted loss value returned by the second terminal based on the blurred first gradient encryption value and the loss encryption value, detecting whether a model to be trained is in a convergent state according to the decrypted loss value — S30

obtaining a second gradient value according to the random vector and the decrypted first gradient value and determining a sample parameter corresponding to the second gradient value as a model parameter of the model to be trained — S40

FIG. 2

obtaining a first loss value previously obtained by the first terminal, and recording the decrypted loss value as a second loss value — a1

calculating a difference between the first loss value and the second loss value, and determining whether the difference is less than or equal to a preset threshold — a2

when the difference is less than or equal to the preset threshold, determining that the model to be trained is in the convergent state — a3

when the difference is greater than the preset threshold, determining that the model to be trained is in a non-convergent state — a4

FIG. 3

when the first terminal receives the encrypted second data sent by the second terminal, obtaining first data and a sample label corresponding to the first data ⟋ S11

calculating a loss value based on the first data, the encrypted second data, the sample label, and a preset loss function, and encrypting the loss value through a homomorphic encryption algorithm to obtain the encrypted loss value which is the loss encryption value ⟋ S12

obtaining a gradient function according to the preset loss function, calculating a first gradient value according to the gradient function, and encrypting the first gradient value through the homomorphic encryption algorithm to obtain the encrypted first gradient value which is the first gradient encryption value ⟋ S13

FIG. 4

calculating an encryption intermediate result according to the encrypted second data and the first data, encrypting the encryption intermediate result with a preset public key, to obtain a double encryption intermediate result — S50

sending the double encryption intermediate result to the second terminal, to enable the second terminal to calculate a double encryption gradient value based on the double encryption intermediate result — S60

when receiving the double encryption gradient value returned by the second terminal, decrypting the double encryption gradient value through a private key corresponding to the preset public key, and sending the decrypted double encryption gradient value to the second terminal, to enable the second terminal to decrypt the decrypted double encryption gradient value to obtain a gradient value of the second terminal — S70

FIG. 5

receiving encryption sample data sent by the second terminal, obtaining a first partial gradient value of the second terminal according to the encryption sample data and the first data, and encrypting the first partial gradient value through the homomorphic encryption algorithm to obtain the encrypted first partial gradient value which is a second gradient encryption value

S80

sending the second gradient encryption value to the second terminal, to enable the second terminal to obtain a gradient value of the second terminal based on the second gradient encryption value and a second partial gradient value calculated according to the second data

S90

FIG. 6

obtaining a second gradient value according to the random vector and the decrypted first gradient value, updating the second gradient value, and updating the sample parameter according to the updated second gradient value ⟋ A

generating a gradient value update instruction and sending the gradient value update instruction to the second terminal, to enable the second terminal to update a gradient value of the second terminal according to the gradient value update instruction, and updates the sample parameter according to the updated gradient value of the second terminal ⟋ B

after the first terminal determines the model parameter and receives an execution request, sending the execution request to the second terminal, to enable the second terminal, after receiving the execution request, to return a first prediction score to the first terminal according to the model parameter and a variable value of feature variable corresponding to the execution request ⟋ C

after receiving the first prediction score, calculating a second prediction score according to the determined model parameter and the variable value of the feature variable corresponding to the execution request ⟋ D

adding the first prediction score and the second prediction score to obtain a prediction score sum, inputting the prediction score sum into the model to be trained to obtain a model score, and determining whether to execute the execution request according to the model score ⟋ E

FIG. 7

model parameter training apparatus
based on federation learning

| data acquisition module | — 10 |
| first sending module | — 20 |
| model detection module | — 30 |
| parameter determination module | — 40 |

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910158538
- US 2017310643 A1
- CN 109325584 A